# EUROPÄISCHE PATENTSCHRIFT

(11) **EP 0 855 134 B1**
(45) Veröffentlichungstag und Bekanntmachung des Hinweises auf die Patenterteilung: **14.08.2002**
(21) Anmeldenummer: 98100423.7
(22) Anmeldetag: 13.01.1998
(51) Int. Cl.: A01F 15/08

(54) **Rundballenpresse für landwirtschaftliche Halmgüter**
Round baler for agricultural procedure
Presse à balles rondes pour produits agricoles

(30) Priorität: 17.01.1997 DE 19701421
(43) Veröffentlichungstag der Anmeldung: 29.07.1998
(73) Patentinhaber: Lely Maschinenfabrik GmbH, 38304 Wolfenbüttel (DE)
(72) Erfinder: Wilkens, Dieter, Dr., 38302 Wolfenbüttel-Ahlum (DE); Honhold, Joost, 38302 Wolfenbüttel (DE); Röhrbein, Jürgen, 38159 Vechelde (DE)

(56) Entgegenhaltungen:
- DE-C- 19 538 370
- DE-U- 29 514 322
- DE-U- 29 601 671

## Beschreibung

Die Erfindung betrifft eine Rundballenpresse nach dem Oberbegriff des Patentanspruches 1. Solch eine Rundballenpresse ist aus DE 295 14 322 U bekannt.

Rundballenpressen mit Schneidwerk, die das aufgenommene Halmgut vor der Pressung je nach der mit einem Förderrotor in Eingriff befindlichen Messeranzahl mehr oder weniger zerkleinern, gewinnen insbesondere beim Einsatz in Silage stark an Bedeutung. Bisher waren 3 bis 14 Messer üblich, die Tendenz geht zu 20 bis 30 Messern, um noch höhere Preßdichten zu erzielen. Dadurch kann allerdings der Leistungsbedarf der Rundballenpresse stark ansteigen, im Extremfall ist der Leistungsbedarf der Rundballenpresse mit Kurzschnitt-Schneidwerk nahezu doppelt so hoch wie beim Einsatz ohne Schneidwerk.

Es ist beispielsweise aus dem Prospekt Welger Rollpresse RP 200, Druckvermerk 8.96, bekannt, Rundballenpressen im Hauptantriebsstrang vom Schlepper zum Hauptgetriebe gegen Überlast abzusichern, in dem dem Hauptgetriebe eine sogenannte Nockenschaltkupplung, z. B. des Fabrikats Walterscheid K 64, vorgeschaltet wird, die bei Überschreiten des Gesamtantriebsmomentes der Rundballenpresse deren gesamten Antrieb vorübergehend abschaltet.

Die bisherige Anordnung dieser bekannten Nockenschaltkupplung hat zwei gravierende Nachteile:
- Sichert man die Rundballenpresse mit einem Drehmomentwert an der Nockenschaltkupplung ab, der eine optimale Verdichtung von kurzgeschnittenem Halmgut ermöglicht, so ergeben sich beim Einsatz der Rundballenpresse ohne Schneidwerk für die Preßelemente und deren Antriebe zu hohe Antriebsmomente, da nahezu die gesamte Antriebsleistung, abzüglich des relativ geringen Aufsammlerleistungsbedarfs (ca. 2- kW), in den Preßkammerantrieb geht mit der Folge, daß es zu Zerstörungen der Antriebe bzw. der Preßelemente kommen kann.
- Beim Ansprechen der Nockenschaltkupplung schaltet der gesamte Antrieb ab. Der Ballen bleibt in der Preßkammer stehen. Ein Wiederanfahren ist häufig nicht möglich. Als Abhilfe wird die Preßkammer geöffnet, so daß die Preßkammer entlastet wird und der Antrieb wieder anläuft. Besonders nachteilig ist hierbei, daß der ungebundene Preßkammerinhalt ausgestoßen wird oder allenfalls nur mit erheblicher Übergröße abbindbar ist, wie es die Rundballenpressen des Fabrikats Claas Rollant durch begrenzte hydraulische Öffnung der Preßkammer ermöglichen, siehe Prospekt Claas Rollant 66, 46 Silage, 46 Roto Cut Druckvermerk 8/95. Hierbei ist jedoch von Nachteil, daß der übergroße Ballen zum Einwickeln mit Folie in üblichen Folienwickelgeräten ungeeignet ist und deshalb häufig trotzdem aufgeschnitten und "überpreßt" werden muß.

Ferner ist durch die EP 0150 629 B 1 eine Rundballenpresse bekannt geworden, welche eine Drehmoment-Meßeinrichtung an der Hauptantriebswelle aufweist, die eine Spanneinrichtung für die Preßriemen so steuert, daß die Preßriemen etwas entspannt werden, wenn das Antriebsmoment über einen vorbestimmten Grenzwert ansteigt. Mit dieser Einrichtung läßt sich zwar die Ansprechhäufigkeit der Rutschkupplung in der Hauptantriebswelle beim Aufsammeln von Schwadanhäufungen reduzieren, zum Vermeiden eingangs genannter Nachteile gibt diese Einrichtung aber keine Lösungshinweise.

Der Erfindung liegt die Aufgabe zugrunde, Überlastungen der Preßelemente und deren Antriebe insbesondere auch bei unterschiedlichen Betriebszuständen, z. B. mit und ohne Schneidwerksbetrieb, wirksam zu vermeiden.

Zur Lösung dieser Aufgabe wird gemäß der Erfindung vorgeschlagen, daß speziell im Antriebsstrang der Preßelemente zwischen dem Hauptgetriebe und den Preßelementen wenigstens ein Lastmeßfühler vorgesehen ist, der bei Erreichen eines vorbestimmbaren Belastungswertes der Preßelemente die Auslösung der Bindeeinrichtung und/oder die Ausschaltung der Zuführelemente darstellt.

Da erfindungsgemäß ausschließlich die Belastung der den Hauptleistungsverbraucher darstellenden Preßelemente, z. B. für die Auslösung der Bindeeinrichtung festgestellt wird, ergeben sich selbst bei verschiedenen Erntegütern sowie unterschiedlichen Durchsatzleistungen der Presse und insbesondere beim Einsatz der Rundballenpresse mit und ohne Schneidwerk keine Überlastungen der Preßelemente mehr. Zum Erreichen einer optimalen Preßdichte stellt man den Belastungswert so ein, daß die Bindeeinrichtung z. B. ca. 5 % unter dem maximal zulässigen Belastungsgrenzwert über den Lastmeßfühler ausgelöst wird. Somit ist in jedem Fall eine Fertigstellung des Ballens ohne Überlastung gewährleistet. Ferner kann man auch mittels der Lastmeßfühler die Zuführelemente, d. h. den Aufsammler und/oder den Förderrotor für das Schneidwerk abschalten. Durch das Abschalten des Förderrotors lassen sich z. B. Störungen des Bindevorganges vermeiden, die dadurch entstehen können, daß z. B. Netz vom Förderrotor mitgenommen und um diesen gewickelt wird.

Eine besonders vorteilhafte Ausführungsform besteht darin, daß den Zuführelementen wenigstens eine schaltbare Überlastkupplung zugeordnet ist, die spätestens bei Überschreiten eines maximal zulässigen Belastungswertes der Preßelemente über ein Ausgangssignal des Lastmeßfühlers betätigt wird und die Zuführelemente, zumindest den Aufsammler, ausschaltet. Dadurch wird die Gutzufuhr in die Preßkammer gestoppt, so daß eine Überlastung selbst bei Störungen der Bindeeinrichtung unmöglich ist. Die Bindung kann spätestens gleichzeitig mit dem Ausschalten der Zuführelemente durch den Lastmeßfühler oder auch manuell ausgelöst werden, da eine Ballendrehung weiterhin gewährleistet ist. Da erfindungsgemäß der Hauptleistungsverbraucher, nämlich die Preßelemente, als Steuergröße dienen für das Ein- und/oder Ausschalten der vor- bzw. nachgelagerten Funktionen der Rundballenpresse, erübrigt sich eine Absicherung des Hauptantriebsstranges, also der Eingangswelle des Hauptgetriebes und es können für die Zuführelemente Überlastsicherungen mit kleinerem Ansprechmoment und damit kostengünstigere verwendet werden.

Es ist grundsätzlich aber auch im Rahmen der Erfindung möglich, daß den Zuführelementen eine Überlastkupplung zugeordnet ist, die selbsttätig den Antrieb der Zuführelemente, zumindest den Aufsammler, spätestens bei einem Belastungswert des Förderrotors des Schneidwerkes ausschaltet, der kurz unterhalb des maximalen Belastungswertes der Preßelemente liegt, so daß in jedem Fall noch die Umschnürung des Rundballens möglich ist. Hierdurch ist der Antrieb im Prinzip doppelt abgesichert, einerseits durch das Auslösen der Bindeeinrichtung über den Lastmeßfühler der Preßelemente, wobei der Schlepperfahrer üblicherweise z. B. bei Beginn der Bindung einen Signalton erhält und die Rundballenpresse anhält und andererseits durch das automatische Abschalten des Aufsammlers beim maximalen Belastungswert, wenn aus irgendeinem Grund die Bindung nicht in Abhängigkeit vom Lastfühler ordnungsgemäß in Gang gesetzt wurde.

Gemäß einem weiteren Merkmal der Erfindung ist ein leistungsverzweigtes Hauptgetriebe mit zwei Abtriebswellen vorgesehen, von denen eine die Preßelemente antreibt und den Lastmeßfühler aufweist, während die andere ein oder mehrere Zuführelemente antreibt und mit einer Überlastkupplung versehen ist. Hierdurch läßt sich insbesondere bei Einsatz von Kurzschnittschneidwerken eine nahezu auf beide Abtriebswellen gleichmäßig verteilte Lastverteilung erzielen, zumal am Ende des Preßvorganges der Leistungsbedarf der Preßelemente kaum höher ist als der des Schneidrotors, so daß sowohl die Preßelemente als auch die Zuführelemente nahezu an ihre Belastungsgrenzen gefahren werden.

Das Hauptgetriebe kann im Rahmen der Erfindung auch ohne Leistungsverzweigung mit nur einer Abtriebswelle ausgeführt sein, welche sowohl die Preßelemente als auch die Zuführelemente antreibt, wobei der Lastmeßfühler so angeordnet ist, daß dieser nur die Belastung aller oder nahezu aller Preßelemente feststellt, während der Antriebsstrang für die Zuführelemente die Überlastkupplung aufweist.

Bei der Ausführung der Erfindung mit zwei Abtriebswellen gemäß Unteranspruch 4 kann der Lastmeßfühler als handelsübliche Drehmoment-Meßeinrichtung ausgebildet sein, die in der Abtriebswelle für die Preßelemente angeordnet ist.

Eine konstruktiv einfache und kostengünstige Ausgestaltung eines Lastmeßfühlers ist dadurch gekennzeichnet, daß wenigstens ein Abschnitt der Abtriebswelle für die Preßelemente, z. B. durch Verjüngung als Torsionsstrecke ausgebildet ist, und der Torsionswinkel als Parameter für die Auslösung der Bindeeinrichtung bzw. die Ausschaltung der Zuführelemente dient. Dabei kann die Messung des Torsionswinkels nach einem weiteren Kennzeichen der Erfindung über wenigstens zwei auf der Abtriebswelle befestigte Scheiben, Spulen o. ä. erfolgen, die mit Sensoren zusammenwirken. Durch Versatz der Sensoren in Umfangsrichtung und/oder bei Ausbildung der beiden Scheiben mit Lochbildern, die eine Impulszählung ermöglichen, läßt sich ein Signal gewinnen, das z. B. für die Auslösung der Bindeeinrichtung dient.

Weitere zweckmäßige Ausbildungen ergeben sich aus den Unteransprüchen.

In der nachfolgenden Zeichnung ist die Erfindung an zwei Ausführungsbeispielen näher erläutert. Es zeigt:
- Fig. 1:: eine perspektivische Ansicht des vorderen Teiles einer Rundballenpresse mit einer erfindungsgemäßen Einrichtung in schematischer Darstellung;
- Fig. 2:: eine zweite Ausführungsform der Erfindung in schematischer Darstellung und in einer Ansicht wie Figur 1;
- Fig. 3:: eine Draufsicht auf eine als Lastmeßfühler ausgebildete Antriebswelle für die Preßelemente.

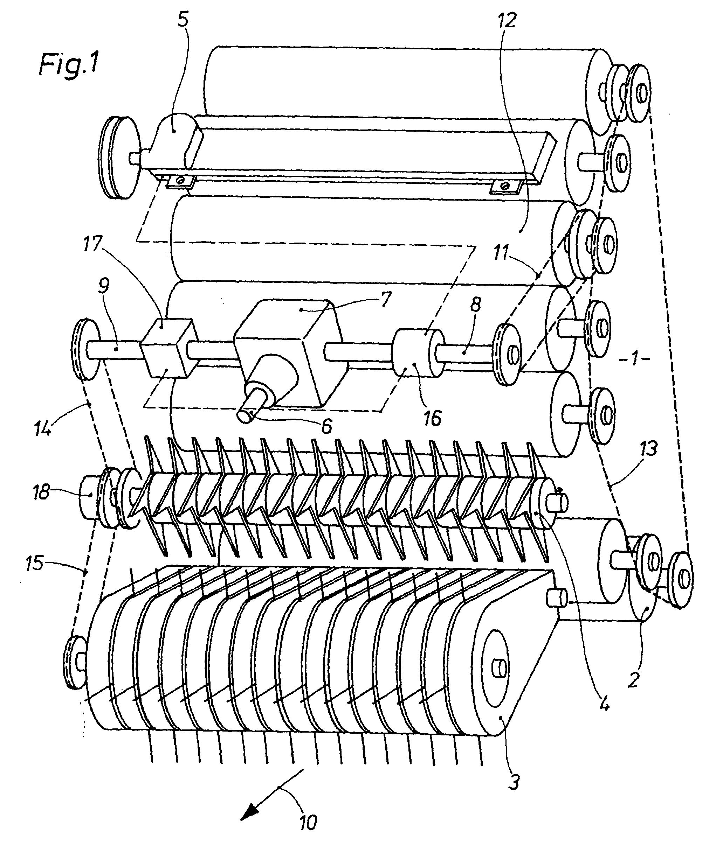

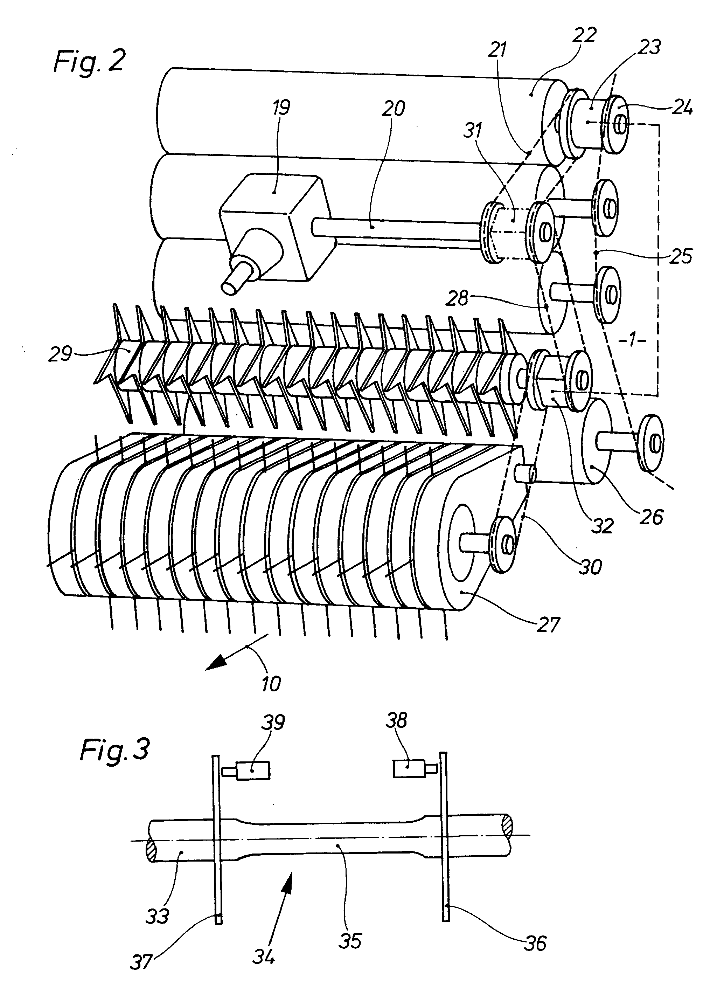

In den Figuren 1 und 2 ist jeweils der vordere Teil einer Rundballenpresse dargestellt. Sie weist einen zylindrischen Preßraum 1 mit konstantem Preßraumdurchmesser auf, der von angetriebenen Walzen 2, Förderstabketten oder Riemen als Preßelemente gebildet wird. Die Rundballenpresse besteht darüber hinaus im wesentlichen aus einem Aufsammler 3, einem Förderrotor 4, der mit nicht dargestellten Schneidmessern zusammenwirkt und einer Bindeeinrichtung 5 zum Umschnüren des Rundballens mit Garn. Es kann aber auch eine Bindeeinrichtung für Netz o. ä. vorgesehen sein.

Der Antrieb der Rundballenpresse erfolgt von einem nicht dargestellten Zugfahrzeug, an das die Rundballenpresse anhängbar ist und dessen Antriebswelle mit der Eingangswelle 6 eines Hauptgetriebes 7 der Rundballenpresse kuppelbar ist. Das Hauptgetriebe 7 weist zwei Abtriebswellen 8, 9 auf. Die in Fahrtrichtung, siehe Pfeil 10, der Rundballenpresse gesehen linke Abtriebswelle 8 treibt über einen Kettentrieb 11 eine Hauptantriebswalze 12 an, von der der Antrieb aller übrigen Walzen 2 über einen zweiten Kettentrieb 13 erfolgt. Die rechte Abtriebswelle 9 treibt über einen Kettentrieb 14 den Förderrotor 4 und von diesem über einen weiteren Kettentrieb 15 den Aufsammler 3 an. Die linke Abtriebswelle 8 ist mit einer handelsüblichen Drehmoment-Meßnabe 16 versehen, die als Lastmeßfühler für die Walzen 2, 12 dient, deren Antriebskräfte mit zunehmender Preßdichte progressiv ansteigen. In der rechten Abtriebswelle 9 ist eine Überlastkupplung, z. B. eine schaltbare Nockenschaltkupplung 17 eingebaut. Die Drehmoment-Meßnabe 16 steht über in Strichlinie dargestellten Steuerleitungen mit einem nicht näher dargestellten Antrieb der Bindeeinrichtung 5 sowie mit der schaltbaren Nockenschaltkupplung 17 in Verbindung.

Während des Preßbetriebes steigt das Drehmoment in der Abtriebswelle 8 für den Antrieb der Walzen 2, 12 mit zunehmender Preßdichte im Preßraum 1 progressiv an, bis es einen voreinstellbaren Wert erreicht und ein Signal sendet, das zum Einschalten des Antriebes der Bindeeinrichtung 5 dient. Da in der Drehmoment-Meßnabe 16 ein Wert eingestellt wird, der unterhalb des maximal zulässigen Belastungswertes der Antriebe der Walzen 2, 12 liegt, ist unabhängig von Belastungswerten der vorgeschalteten Bearbeitungsorgane 4, d. h. mit Schneidwerk oder ohne, immer gewährleistet, daß ein gepreßter Ballen umschnürt werden kann. Es kann unter Umständen zweckmäßig sein, beim Einschalten der Bindeeinrichtung 5 etwa gleichzeitig den Förderrotor 4 und den Aufsammler 3 auszuschalten, was durch ein einfaches Steuersignal von der Meßnabe 16 an die schaltbare Nockenschaltkupplung 17 erfolgt. Es kann aber auch nur der Aufsammler 3 abgeschaltet werden, in dem z. B. eine Elektro-Magnetkupplung 18 in dem Aufsammlerantrieb angeordnet ist, die von der Meßnabe 16 spätestens ansteuerbar ist, wenn ein maximal zulässiges Lastmoment auftritt, das z. B. ca. 2 bis 5 % größer ist als der voreingestellte Lastwert für die Auslösung der Bindeeinrichtung 5. Dadurch wird die Gutszufuhr in den Preßraum 1 zwangsläufig unterbunden, so daß der Schlepperfahrer anhalten muß, da der Aufsammler 3 das Material vor sich herschiebt. Bei derartiger Ausschaltung der Zuführelemente 3, 4 kann ein Signal der Meßnabe 16 letztmalig noch die Bindeeinrichtung 5 auslösen, was aber auch manuell möglich ist, so daß der Ballen selbst im Extremfall noch ordnungsgemäß umschnürbar ist.

Anstelle der gesteuerten Nockenschaltkupplung 17 kann auch eine selbsttätig, spätestens bei einem maximalen Belastungswert der Zuführelemente 3, 4 den Aufsammler 3 bzw. den Förderrotor 4, abschaltende Nockenschaltkupplung vorgesehen sein. Der maximale Belastungswert der Zuführelemente 3, 4 ist kleiner oder gleich dem maximalen Belastungswert der Preßelemente 2, 12 eingestellt, so daß die Bindeeinrichtung 5 in Abhängigkeit vom Lastmeßfühler 16 auslösbar ist.

Bei dem in Figur 2 gezeigten Ausführungsbeispiel weist ein Hauptgetriebe 19 nur eine Abtriebswelle 20 auf. Von dieser Abtriebswelle 20 führt ein erster Kettentrieb 21 zu einer Hauptantriebswalze 22, welche auf ihrem Antriebsstummel eine Drehmoment-Meßnabe 23 trägt, die mit einem Kettenrad 24 für den Kettentrieb 25 der anderen Walzen 26 so zusammenwirkt, daß sie die Belastung aller Walzen 26 mit Ausnahme der Hauptantriebswalze 22 feststellt. Da das Antriebsmoment der Hauptantriebswalze 22 nur ca. 5 % des Gesamtmomentes beträgt, (die Walzen im Preßraumboden übertragen die größten Momente) ist diese Messung hinreichend genau, um z. B. eine Bindeeinrichtung bei einem ersten voreinstellbaren Drehmomentwert auszulösen und z. B. einen Aufsammler 27 bei einem zweiten voreinstellbaren Drehmomentwert der Meßnabe 23. Von der Abtriebswelle 20 führt ein zweiter Kettentrieb 28 zum Förderrotor 29 und von diesem ein weiterer 30 zum Aufsammler 27. Zwischen Abtriebswelle 20 und Kettenrad 24 kann eine in Strichlinie eingezeichnete, schaltbare Nockenschaltkupplung 31 vorgesehen sein, über die der Förderrotor 29 und damit der Aufsammler 27 in Abhängigkeit von der Belastung der Walzen 26 auf die Drehmoment-Meßnabe 23 gesteuert wird. In Fig. 2 ist eine schaltbare Kupplung 32 im Antrieb des Aufsammlers 27 vorgesehen, die durch ein Signal der Drehmoment-Meßnabe 23 bei Überschreiten der maximalen Belastungsgrenze der Walzen 26 den Aufsammler 27 abschaltet. Es ist auch möglich, die Bindung lastunabhängig auszulösen, z. B. manuell unterhalb des eingestellten Auslösezeitpunktes, wenn z. B. kein vollständiger Ballen mehr erzeugbar ist.

Figur 3 zeigt eine Abtriebswelle 33, die selbst als Lastmeßfühler 34 ausgebildet ist, so daß eine relativ teure und empfindliche DMS-Meßnabe entfallen kann. Ein mittlerer Abschnitt 35 der Abtriebswelle 33 weist statt des runden einen rechteckförmig verjüngten Querschnitt auf, der als Torsionsstrecke dienen soll, um ausreichende Torsionswinkel zu erzeugen. Beidseits von der Torsionsstrecke ist jeweils eine Scheibe 35, 36 befestigt, die z. B. mit Lochbildern versehen sind. Im unverdrillten Zustand der Abtriebswelle 33 fluchten die Lochbilder und die Fluchtlinie liegt parallel zur Wellenachse. Jeder Scheibe 36, 37 ist ein Sensor 38, 39 zugeordnet, die so z. B. in Umfangsrichtung gegeneinander versetzt angeordnet sind, daß bei einem vorbestimmbaren Torsionswinkel einer der Sensoren 38, 39 ein Signal erzeugt, welches z. B. zur Auslösung der Bindeeinrichtung dienen kann. Diese Ausführung ist auch deshalb günstig, weil es bei der Erfindung nicht auf absolute Zahlenmeßwerte der Drehmomente ankommt, sondern auf einmalig, z. B. durch Kalibrierung voreinstellbare Belastungspunkte der Preßelemente, die zur Steuerung von Funktionen verarbeitet werden.

Als Lastmeßfühler kann aber auch z. B. eine Kraftmeßdose verwendet werden, die die Auflagerkraft der Abtriebswelle 8 im Bereich des Kettenrades des Kettentriebes 11 mißt, es kann auch die Lagerkraft der Antriebsseite der Hauptantriebswalze 12 als Steuergröße dienen. Ferner kann Belastung der Preßelemente auch über eine Kettenkraftmessung z. B. mittels einer zusätzlichen Spannrolle im Lasttrum des Kettentriebes 11 gemessen werden.

## Patentansprüche

1. Rundballenpresse für landwirtschaftliche Halmgüter, wie Heu, Stroh oder Silage, bei welcher der Antrieb der Preßelemente, wie Walzen (2, 12, 22, 26), Riemen, Förderstabketten o. ä. und der Zuführelemente (3, 4, 27, 29) von einem Hauptgetriebe (7, 19) abgeleitet wird, dessen Eingangswelle (6) mit der Antriebswelle eines Zugfahrzeuges verbindbar ist und welche wenigstens eine Bindeeinrichtung (5) zum Umschnüren eines gepreßten Rundballens mit Bindemittel (z. B. Garn, Netz o. ä.) aufweist, **dadurch gekennzeichnet, daß** im Antriebsstrang (8, 11, 12, 13, 19, 20, 22, 24, 33) der Preßelemente zwischen dem Hauptgetriebe (7, 19) und den Preßelementen (2, 12, 22, 26) wenigstens ein Lastmeßfühler (16, 23, 34) vorgesehen ist, der bei Erreichen eines vorbestimmbaren Belastungswertes der Preßelemente (2, 12, 22, 26) die Auslösung der Bindeeinrichtung (5) und/oder die Ausschaltung der Zuführelemente (3, 4, 27, 29) darstellt.

2. Rundballenpresse nach Anspruch 1, **dadurch gekennzeichnet, daß** den Zuführelementen (3, 4, 27, 29) wenigstens eine schaltbare Überlastkupplung (17, 18, 31, 32) zugeordnet ist, die spätestens bei Überschreiten eines maximal zulässigen Belastungswertes der Preßelemente (2, 12, 22, 26) über ein Ausgangssignal des Lastmeßfühlers (16, 23, 34) betätigt wird und die Zuführelemente (3, 4, 27, 29), zumindest den Aufsammler (3, 27), ausschaltet.

3. Rundballenpresse nach Anspruch 1, **dadurch gekennzeichnet, daß** den Zuführelementen (4, 29) eine Überlastkupplung, insbesondere Nockenschaltkupplung (17), zugeordnet ist, die selbsttätig den Antrieb der Zuführelemente (4, 29), zumindest den Aufsammler (3, 27), spätestens bei einem Belastungswert des Förderrotors (4, 29) des Schneidwerks ausschaltet, der kurz unterhalb des maximalen Belastungswertes der Preßelemente (2, 12, 22, 26) liegt, so daß in jedem Fall noch die Umschnürung des Rundballens möglich ist.

4. Rundballenpresse nach einem oder mehreren der vorhergehenden Ansprüche, **gekennzeichnet durch** ein leistungsverzweigtes Hauptgetriebe (7) mit zwei Abtriebswellen (8, 9), von denen eine (8) die Preßelemente (2, 12) antreibt und den Lastmeßfühler (16, 34) aufweist, während die andere (9) ein oder mehrere Zuführelemente (3, 4) antreibt und mit einer Überlastkupplung (17) versehen ist.

5. Rundballenpresse nach einem oder mehreren der vorhergehenden Ansprüche 1 bis 3, **gekennzeichnet durch** ein Hauptgetriebe (19) mit nur einer Abtriebswelle (20), welche sowohl die Preßelemente (22, 26) als auch die Zuführelemente (27, 29) antreibt, wobei der Lastmeßfühler (23) so angeordnet ist, daß dieser nur die Belastung aller oder nahezu aller Preßelemente (26) feststellt, während der Antriebsstrang (28, 30) für die Zuführelemente (27, 29) die Überlastkupplung (31 oder 32) aufweist.

6. Rundballenpresse nach einem oder mehreren der vorhergehenden Ansprüche, **dadurch gekennzeichnet, daß** der Lastmeßfühler als Drehmoment-Meßeinrichtung (16) ausgebildet und in der Abtriebswelle (8) für die Preßelemente (2, 12) angeordnet ist.

7. Rundballenpresse nach einem oder mehreren der vorhergehenden Ansprüche, **dadurch gekennzeichnet, daß** wenigstens ein Abschnitt (35) der Abtriebswelle (39) für die Preßelemente, z. B. durch Verjüngung als Torsionsstrecke ausgebildet ist, und der Torsionswinkel als Lastmeßfühler (34) bzw. Parameter für die Auslösung der Bindeeinrichtung (5) bzw. die Ausschaltung der Zuführelemente (3, 4, 27, 29) dient.

8. Rundballenpresse nach Anspruch 7, **dadurch gekennzeichnet, daß** der Torsionswinkel über wenigstens zwei auf der Abtriebswelle (33) befestigte Scheiben (36, 37), Spulen o. ä. feststellbar ist, die mit Sensoren (38, 39) zusammenwirken.

9. Rundballenpresse nach einem oder mehreren der vorhergehenden Ansprüche, **dadurch gekennzeichnet, daß** der Lastmeßfühler (23) direkt an einem Preßelement (22) angeordnet ist, von dem der Antrieb der anderen Preßelemente (26) z. B. über Ketten (25), Wellen oder Getriebe erfolgt.

10. Rundballenpresse nach einem oder mehreren der vorhergehenden Ansprüche, **dadurch gekennzeichnet, daß** die Belastung der Preßelemente dem Bediener angezeigt wird.

11. Rundballenpresse nach einem oder mehreren der vorhergehenden Ansprüche, **dadurch gekennzeichnet, daß** die Rundballenpresse nur einen Aufsammler ohne Schneidwerk aufweist.

12. Rundballenpresse nach einem oder mehreren der vorhergehenden Ansprüche, **dadurch gekennzeichnet, daß** die Lagerlast der Abtriebswelle (8) oder der Hauptantriebswalze (12) gemessen wird und als Steuergröße für die Bindeeinrichtung bzw. die Zuführelemente genutzt wird.

13. Rundballenpresse nach einem oder mehreren der vorhergehenden Ansprüche 1 bis 11, **dadurch gekennzeichnet, daß** die Kettenkraft im Lasttrum der Kettentriebe (11, 13, 21, 25) gemessen wird.

## Claims

1. A round baler for agricultural stalk material, such as hay, straw or silage, in which drive of the baling components, such as rollers (2, 12, 22, 26), belts, bar chain conveyors or the like, and the feed components (3, 4, 27, 29) is derived from a main transmission (7, 19), the input shaft (6) of which may be connected with the drive shaft of a hauling vehicle and which comprises at least one binding means (5) for tying up a compressed round bale with binder (e.g. twine, netting or the like), **characterised in that** in the baling component drive train (8, 11, 12, 13, 19, 20, 22, 24, 33) between the main transmission (7, 19) and the baling components (2, 12, 22, 26) there is provided at least one load sensor (16, 23, 34) which produces triggering of the binding means (5) and/or disconnection of the feed components (3, 4, 27, 29) when a predeterminable load value is reached for the baling components (2, 12, 22, 26).

2. A round baler according to claim 1, **characterised in that** at least one engaging and disengaging overload clutch (17, 18, 31, 32) is associated with the feed components (3, 4, 27, 29), which is actuated at the latest when a maximum admissible load value is exceeded for the baling components (2, 12, 22, 26) via an output signal from the load sensor (16, 23, 34) and disconnects the feed components (3, 4, 27, 29), at least the pick-up (3, 27).

3. A round baler according to claim 1, **characterised in that** an overload clutch, in particular a cam control clutch (17), is associated with the feed components (4, 29) which automatically disconnects the drive of the feed components (4, 29), at least the pick-up (3, 27), at the latest at a load value of the conveyor rotor (4, 29) of the cutting mechanism which is just below the maximum load value for the baling components (2, 12, 22, 26), such that in all cases tying up of the round bale is still possible.

4. A round baler according to one or more of the preceding claims, **characterised by** a split torque main transmission (7) with two driven shafts (8, 9), one (8) of which drives the baling components (2, 12) and comprises the load sensor (16, 34), while the other (9) drives one or more feed components (3, 4) and is provided with an overload clutch (17).

5. A round baler according to one or more of preceding claims 1 to 3, **characterised by** a main transmission (19) with only one driven shaft (20), which drives both the baling components (22, 26) and the feed components (27, 29), wherein the load sensor (23) is so arranged that it merely detects the loading of all or virtually all the baling components (26), while the drive train (28, 30) for the feed components (27, 29) comprises the overload clutch (31 or 32).

6. A round baler according to one or more of the preceding claims, **characterised in that** the load sensor takes the form of a torque meter (16) and is arranged in the driven shaft (8) for the baling components (2, 12).

7. A round baler according to one or more of the preceding claims, **characterised in that** at least one portion (35) of the driven shaft (39) for the baling components is constructed as a torsion segment, e.g. by tapering, and the torsion angle serves as load sensor (34) or a parameter for triggering the binding means (5) or disconnecting the feed components (3, 4, 27, 29).

8. A round baler according to claim 7, **characterised in that** the torsion angle may be detected via at least two disks (36, 37), coils or the like fixed to the driven shaft (33), which interact with sensors (38, 39).

9. A round baler according to one or more of the preceding claims, **characterised in that** the load sensor (23) is arranged directly on a baling component (22), from which drive of the other baling components (26) proceeds for example via chains (25), shafts or gears.

10. A round baler according to one or more of the preceding claims, **characterised in that** the loading of the baling components is displayed to the operator.

11. A round baler according to one or more of the preceding claims, **characterised in that** the round baler comprises only one pick-up without cutting mechanism.

12. A round baler according to one or more of the preceding claims, **characterised in that** the bearing load of the driven shaft (8) or of the main drive roller (12) is measured and used as a control variable for the binding means or the feed components.

13. A round baler according to one or more of preceding claims 1 to 11, **characterised in that** the chain force is measured in the load run of the chain drives (11, 13, 21, 25).

## Revendications

1. Presse à balles rondes pour produits agricoles à tiges comme le foin, la paille ou le fourrage ensilé, dans laquelle l'entraînement des éléments presseurs comme les cylindres (2, 12, 22, 26), les courroies, les chaînes transporteuses à tasseaux, ou analogues, et les éléments d'amenée (3, 4, 27, 29), est pris sur un renvoi principal (7, 19) dont l'arbre d'entrée (6) est relié à l'arbre d'entraînement d'un véhicule tracteur et qui comprend au moins un dispositif de liage (5) destiné à lier une balle ronde comprimée avec des moyens de liage (par exemple une ficelle, un filet, ou analogues), **caractérisée en ce qu'**il est prévu dans la chaîne cinématique (8, 11, 12, 13, 19, 20, 22, 24, 33) des éléments presseurs, entre le renvoi principal (7, 19) et les éléments presseurs (2, 12, 22, 26), au moins un capteur de mesure de charge (16, 23, 34) qui, lorsqu'on atteint un niveau de charge des éléments presseurs (2, 12, 22, 26) pouvant être prédéterminé, provoque le déclenchement du dispositif de liage (5) et/ou la déconnexion des éléments d'amenée (3, 4, 27, 29).

2. Presse à balles rondes selon la revendication 1, **caractérisée en ce qu'**aux éléments d'amenée (3, 4, 27, 29), est associé au moins un accouplement de surcharge pouvant être commandé (17, 18, 31, 32) qui est actionné, au plus tard lors du dépassement d'un niveau de charge maximal admissible des éléments presseurs (2, 12, 22, 26) par l'intermédiaire d'un signal de sortie du capteur de mesure de charge (16, 23, 34) et déconnecte les éléments d'amenée (3, 4, 27, 29), du moins le ramasseur (3, 27).

3. Presse à balles rondes selon la revendication 1, **caractérisée en ce qu'**aux éléments d'amenée (4, 29), est associé un accouplement de surcharge, en particulier un accouplement à commande à cames (17) qui déconnecte automatiquement l'entraînement des éléments d'amenée (4, 29), au moins le ramasseur (3, 27), au plus tard en présence d'un niveau de charge du rotor transporteur (4, 29) du mécanisme de coupe, qui se trouve juste au-dessous du niveau de charge maximal des éléments presseurs (2, 12, 22, 26), de manière que, dans chaque cas, le liage de la balle ronde reste encore possible.

4. Presse à balles rondes selon une ou plusieurs des revendications précédentes, **caractérisée par** un renvoi principal (7) à puissance ramifiée, comprenant deux arbres de sortie (8, 9) dont l'un (8) entraîne les éléments presseurs (2, 12) et présente le capteur de mesure de charge (16, 34) tandis que l'autre (9) entraîne un ou plusieurs éléments d'amenée (3, 4) et est muni d'un accouplement de surcharge (17).

5. Presse à balles rondes selon une ou plusieurs des revendications précédentes 1 à 3, **caractérisée par** un renvoi principal (19) comprenant seulement un arbre de sortie (20) qui entraîne aussi bien les éléments presseurs (22, 26) que les éléments d'amenée (27, 29), le capteur de mesure de charge (23) étant disposé de manière qu'il capte seulement la charge de tous ou de presque tous les éléments presseurs (26), tandis que la chaîne cinématique (28, 30) prévue pour les éléments d'amenée (27, 29) présente l'accouplement de surcharge (31 ou 32).

6. Presse à balles rondes selon une ou plusieurs des revendications précédentes, **caractérisée en ce que** le capteur de mesure de la charge est constitué par un dispositif de mesure du couple (16) et est agencé dans l'arbre de sortie (18) prévu pour les éléments presseurs (2, 12).

7. Presse à balles rondes selon une ou plusieurs des revendications précédentes, **caractérisée en ce qu'**au moins un segment (35) de l'arbre de sortie (39) prévu pour les éléments presseurs est réalisé, par exemple, par amincissement, pour constituer une barre de torsion, et l'angle de torsion sert de capteur de mesure de charge (34) ou de paramètre pour le déclenchement du dispositif de liage (5) ou pour la déconnexion des éléments d'amenée (3, 4, 27, 29).

8. Presse à balles rondes selon la revendication 7, **caractérisée en ce que** l'angle de torsion peut être capté au moyen d'au moins deux disques (36, 37), bobines ou analogues, fixés sur l'arbre de sortie (33) et qui coopèrent avec des capteurs (38, 39).

9. Presse à balles rondes selon une ou plusieurs des revendications précédentes, **caractérisée en ce que** le capteur de mesure de charge (23) est disposé directement sur un élément presseur (22), à partir duquel s'effectue l'entraînement des autres éléments presseurs (26), par exemple par l'intermédiaire de chaînes (25), d'arbres ou de renvois.

10. Presse à balles rondes selon une ou plusieurs des revendications précédentes, **caractérisée en ce que** la charge des éléments presseurs est indiquée au conducteur.

11. Presse à balles rondes selon une ou plusieurs des revendications précédentes, **caractérisée en ce que** la presse à balles rondes présente seulement un ramasseur sans mécanisme de coupe.

12. Presse à balles rondes selon une ou plusieurs des revendications précédentes, **caractérisée en ce que** la charge des paliers de l'arbre de sortie (8) ou du cylindre d'entraînement principal (12) est mesurée et utilisée comme grandeur de commande pour le dispositif de liage ou les éléments d'amenée.

13. Presse à balles rondes selon une ou plusieurs des revendications précédentes 1 à 11, **caractérisée en ce que** la force de la chaîne est mesurée dans le brin en charge des entraînements à chaîne (11, 13, 21, 25).
